# EUROPEAN PATENT APPLICATION

(11) **EP 4 644 075 A1**
(43) Date of publication of application: **05.11.2025**
(21) Application number: 24853474.5
(22) Date of filing: 17.07.2024
(51) Int. Cl.: B28D 5/00, B23K 26/00

(54) **METHOD FOR GENERATING SEMICONDUCTOR WAFER**

(30) Priority: 14.08.2023 CN 202311020245
(71) Applicant: Westlake Instruments (Hangzhou) Technology Co., Ltd., Hangzhou, Zhejiang 310024 (CN)
(72) Inventor: LIU, Fengjiang, Hangzhou Cloud Computing Industrial Park, Zhuantang Street, Xihu District Hangzhou, Zhejiang 310024 (CN); LIU, Dongli, Hangzhou Cloud Computing Industrial Park, Zhuantang Street, Xihu District Hangzhou, Zhejiang 310024 (CN); YU, Xiaoying, Hangzhou Cloud Computing Industrial Park, Zhuantang Street, Xihu District Hangzhou, Zhejiang 310024 (CN)
(74) Representative: Sun, Yiming
(86) International application number: PCT/CN2024/105857
(87) International publication number: WO 2025/036062

(57) **Abstract**

Disclosed herein is a generation method of a semiconductor wafer, including: setting a count of laser scans, setting a scanning path for each laser scan and a point spacing between two adjacent modified points on the scanning path; determining, based on a predetermined rule for each laser scan, a laser scanning speed and a laser pulse repetition frequency required to achieve the point spacing and determining a corresponding diameter of a modified point, and determining laser pulse energy required to achieve the diameter of the modified point and an offset distance of a laser focal point relative to a predetermined peeling surface; performing n times of the laser scans on the predetermined peeling surface inside a crystal ingot on which a pulse laser focuses or below the predetermined peeling surface to form a modified point on the predetermined peeling surface and forming an overlapping region between the modified points formed by at least two laser scans to form a crack extending transversely along the predetermined peeling surface in the overlapping region; and peeling the crystal ingot along the predetermined peeling surface to obtain a wafer and a remaining ingot.The present invention not only eliminates the wafer edge burrs, but also further reduces the material loss of the modified layer, it has the advantages of simple process conditions, good morphology of the modified layer, and low difficulty of peeling of wafers, and is suitable for large-scale industrial applications.

## Description

### TECHNICAL FIELD

The present disclosure relates to the technical field of wafer processing, and in particular to a generation method of a semiconductor wafer.

### BACKGROUND ART

In recent years, with the rapid development of optoelectronics industry and microelectronics industry, aerospace, aviation, machinery, light industry, chemical industry, and other industries, as a whole, are also towards integration and miniaturization direction. Correspondingly, semiconductor devices are required to be more and more integrated, more and more complex, and smaller. Silicon carbide substrate is a core material for newly developed wide-bandwidth semiconductors. Devices made with the silicon carbide substrates exhibit characteristics such as high temperature resistance, high voltage tolerance, high frequency, high power, radiation resistance, etc. Additionally, the devices offer advantages like fast switching speed and high efficiency, which may significantly reduce product power consumption, improve energy conversion efficiency, and minimize product size. Wafer processing is used as a key process in the manufacture of the silicon carbide substrate, and quality effect of slicing directly affects the performance of the silicon carbide substrate.

Laser slicing is a laser technology that separates silicon carbide ingots into individual wafers. The slicing process involves the use of a precision laser beam to form a modified layer inside the ingot, allowing the wafers to be precisely separated by a slight external force along a laser scanning path. Laser scan is a process of forming the modified layer, in which the laser is focused at a predetermined depth inside the silicon carbide ingot, inducing the formation of microcracks that extend along a peeling surface. The presence of uniformly distributed microcracks in the material causes a concentration effect of the stress field around the microcracks. When a peeling force is mechanically applied, the stress is induced by the presence of the modifier layer to produce crack expansion at a specified location, thus completing the peeling of the wafer. The above manner significantly reduces material loss during the slicing process and improves water production efficiency.

Chinese Patent No. CN107790898B discloses a generation method of a SiC wafer including the following process: a peeling surface generation process, which includes separation layer formation processing as follows: positioning a focal point of pulse laser light, which has a wavelength permeable to SiC, at a depth equivalent to a thickness of the wafer to be generated from a first surface, and irradiating the pulse laser light on a single crystal SiC ingot while feeding the single crystal SiC ingot and the focal point in a first direction perpendicular to a second direction with the a deviation angle, thereby forming a separating layer consisting of modified layer and cracks; and a wafer generation process including separating a portion of the single crystal SiC ingot at the separation surface as the interface to generate the SiC wafer. In the peeling surface generation process, the feeding includes a forward movement and a backward movement. The forward movement causes the focal point to move relatively from an end portion of one side of the single crystal SiC ingot to an end portion of the other side, and the backward movement causes the focal point to relatively move from the end portion of the other side to the end portion of one side while maintaining a depth of the focal point at the same depth as during the forward movement, thereby tracing the separation layer that has already been formed. In the forward movement, an initial modified layer is formed from the focal point, and a modified layer is formed at a location slightly shallower than the focal point after the initial modified layer is formed. Starting from an end portion of one side of the single crystal SiC ingot where the irradiation of the pulse laser light begins, a climb of the modified layer is generated. Once the modified layer reaches a depth where the power density of the pulse laser light has become a prescribed value in the interior of the single crystal SiC ingot, the modified layer is formed at a depth at which the power density reaches the prescribed value near the front of the focal point. In the backward movement, the modified layer is formed from the end portion of the other side of the single crystal SiC ingot to the end portion of one side in proximity to the front of the focal point and at the depth at which the power density becomes the prescribed value.

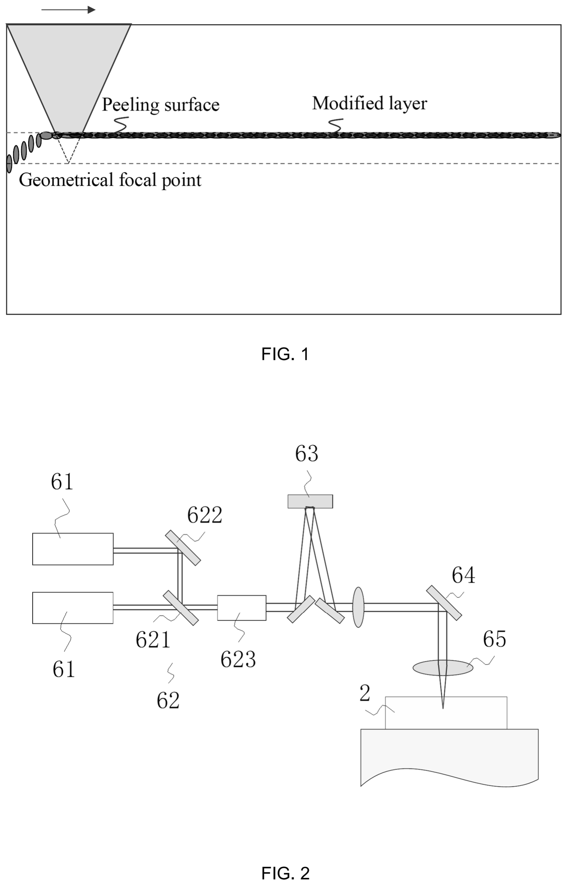

The above-described scheme has the following defects: in the peeling surface generation process, the above-described method avoids the issue of burrs at a laser scanning end of the single crystal SiC ingot by employing a back-and-forth laser scanning technique, thereby reducing material loss. In this case, the burr at the laser scanning end is generated mainly due to the self-organization change of the modified layer during the formation process. That is, after the laser enters the single crystal SiC ingot, a first laser pulse produces a modified point located near a geometrical focal point of focusing lens, and as the laser travels along the scanning direction, the modified point is gradually lifted until an overlap eate of adjacent modified points and laser power density to reach equilibrium, and in a predetermined depth to form a stable modified layer. Referring to FIG. 1, this also leads to a climb of the modified layer in a region of about tens of µm from the end portion of one side of the single crystalline SiC ingot in the forward movement, and the lift is in a range of 40 to 100 µm. The above method only reduces the burrs left on the wafer to a certain extent, but leads to a gradual rise of the modified points at the laser scan end toward the peeling surface, so that after the wafer has been peeled, it is still necessary to grind or thin down the material to a considerable thickness to completely remove the traces left by the laser scan at the end, resulting in a material loss of up to 30%.

Chinese Patent No. CN115635183A discloses a method of laser peeling a workpiece, including: employing a pulse laser with a short pulse width to focus on a predetermined peeling surface inside the workpiece to form a modified point at the predetermined peeling surface inside the workpiece, employing a pulse laser with a long pulse width to focus on the modified point to form a modified region at the modified point and a crack extending in a radial direction along the predetermined peeling surface; and dividing the workpiece into a first workpiece unit and a second workpiece unit along the predetermined peeling surface.

The above scheme has the following defects: the above method employs the pulse laser with the short pulse width to form the modified point on the predetermined peeling surface inside the silicon carbide, and then employs the pulse laser with the long pulse width to focus on the modified point generated by the pulse laser with the short pulse width and form the modified region, which in turn forms the crack extending along the radial direction on the predetermined peeling surface, so that the workpiece may be easily peeled, but this requires that the pulse laser with the short and long pulse widths not only must be strictly aligned with the point, but also must be strictly synchronized with the timing, which is poor in practical practicability and is not conducive to the large-scale industrial application.

### CONTENTS OF THE INVENTION

The problem to be solved by the present invention is to provide a generation method of a semiconductor wafer, which solves the phenomenon of climbing up of the modified points existing in the existing laser back-and-forth scanning technique and the problems of the harsh process conditions existing in the pulse laser articulated scanning of the short pulse width and long pulse width, which not only eliminates the wafer edge burrs, but also further reduces the material loss of the modified layer, it has the advantages of simple process conditions, good morphology of the modified layer, and low difficulty of peeling of wafers, and is suitable for large-scale industrial applications.

The above invention objectives of the present invention are achieved through the following technical solutions:
A generation method of a semiconductor wafer, comprising:
S1, setting a count of laser scans to n times, wherein n is an integer greater than or equal to 2, setting a scanning path for each laser scan and a point spacing between two adjacent modified points on the scanning path;
S2, determining, based on a predetermined rule for the each laser scan, a laser scanning speed and a laser pulse repetition frequency required to achieve the point spacing and determining a corresponding diameter of a modified point, and determining laser pulse energy required to achieve the diameter of the modified point and an offset distance of a laser focal point relative to a predetermined peeling surface;
S3, performing n times of the laser scans on the predetermined peeling surface inside a crystal ingot on which a pulse laser focuses or below the predetermined peeling surface to form a modifie
   d point on the predetermined peeling surface and forming an overlapping region between the modified points formed by at least two laser scans to form a crack extending transversely along the predetermined peeling surface in the overlapping region; and
S4, peeling the crystal ingot along the predetermined peeling surface to obtain a wafer and a remaining ingot.

Specifically, in the present invention, the modified point refers to an independent or consecutive laser action point formed on the predetermined peeling surface; and the point spacing P refers to a point spacing between two adjacent modified points on the predetermined peeling surface, the line distance L refers to a center distance between two adjacent scanning segments, the diameter D of the modified point refers to a diameter of a modified region or a processing point formed on an internal surface of the crystal ingot after the laser pulse acts on the internal surface of the crystal ingot during laser processing.

Further, in S1, the setting a scanning path for each laser scan includes: setting the scanning path for the each laser scan to be a combination path of at least one of a line-by-line scanning path, a grid-interleaved scanning path, a concentric circle scanning path, and a vortex line scanning path.

Even further, in S1, the setting a scanning path for each laser scan further includes: controlling a range of a line distance between two scanning segments spaced apart from each other on the scanning path to be 0.05 mm to 1.00 mm. wherein, the scanning sections on the scanning path are arranged at equal or unequal intervals.

Further, in S1, the point spacing P is controlled to be within a range from 0.5 µm to 50 µm.

Further, in S2, the predetermined rule includes predetermined rules for 1st to n'th laser scans, wherein the predetermined rules for the 1st to n'th laser scans include: a point spacing between two adjacent modified points on 1st to n'th scanning paths being positively correlated with 1st to n'th laser scanning speed and negatively correlated with 1st to n'th laser pulse repetition frequency, wherein the point spacing between the two adjacent modified points on the 1st to n'th scanning paths is greater than or equal to 0.7 times of a diameter of a modified point on n'th laser scan, wherein 1st to n'th laser pulse energy is greater than or equal to 1 µJ, an offset distance of 1st to n'th laser focal point relative to the predetermined peeling surface is within a range of 0 µm-5 µm, and n' is an integer greater than or equal to 1.

Further, in S2, the predetermined rule includes predetermined rules for (n'+1)th to n"th laser scans, wherein the predetermined rules for the (n'+1)th to n"th laser scans include: a point spacing between two adjacent modified points on (n'+1)th to n"th scanning paths being positively correlated with (n'+1)th to n"th laser scanning speed and negatively correlated with (n'+1)th to n"th laser pulse repetition frequency, wherein the point spacing between the two adjacent modified points on the (n'+1)th to n"th scanning paths is less than to a diameter of a modified point on (n'+1)th laser scan, wherein (n'+1)th to n"th laser pulse energy is greater than or equal to 5 µJ, an offset distance of (n'+1)th to n"th laser focal points relative to the predetermined peeling surface is within a range of 0 µm-20 µm, and n" is an integer greater than or equal to 2.

Even further, in S2, the predetermined rules for the (n'+1)th to n"th laser scans further include: controlling the point spacing between the two adjacent modified points on the (n'+1)th to n"th scanning paths to be within a predetermined multiplier range of 0.2-0.6 times of the diameter of the modified point of the (n'+1)th laser scan.

Further, in S3, the performing n times of the laser scans includes: controlling a laser wavelength range of the each laser scan to be 780 nm-2500 nm, and a laser pulse width range of the each laser scan to be 10 fs-100ns.

Further, in S3, the pulse laser is a pulse string including a plurality of sub-pulses; and a time interval between two adjacent sub-pulses is no more than 100 ns.

Further, in S3, the performing n times of the laser scans includes: performing an aberration correction on the pulse laser in advance before the 1st to n'th laser scans.

Even further, S3 further includes controlling a longitudinal thickness range of the modified points for the 1st to n'th laser scans to be 5 µm-40 µm.

Even further, in S3, in an emission path of the pulse laser of the 1st to n'th laser scan, the components including a first laser, a first beam combining and expanding unit, an aberration correction unit, a first workpiece reflector, a first objective lens, and the crystal ingot are sequentially arranged; wherein, at least two first lasers are set in parallel, the first beam combining and expanding unit includes a first combining mirror disposed on an emission path of a pulse laser of one of the first lasers, a first laser reflector disposed between an emission path of a pulse laser of the remaining first lasers and the first beam combining mirror, and a beam expanding mirror disposed on an emission path of a pulse laser of the first combining mirror , the aberration correction unit includes an adaptive optical element, a diffractive optical element, a deformable lens, or the like.

Even further, in S3, the process of the aberration correction includes: performing wavefront shaping on an incident beam of the pulse laser by the adaptive optical element, compensating for aberration of the focusing lens of the pulse laser at a particular depth by the diffractive optical element, or adjusting the deformable lens to preset the aberration and compensate for aberration of the focusing lens of the pulse laser at a particular depth. The adaptive optical element includes a plurality of types, including, but not limited to, a spatial light modulator and a digital micromirror array, the diffractive optical element includes a plurality of types, including, but not limited to, a beam shaper, a beamsplitter, a diffraction cone lens, a helical phase plate, a homogenizer, and a multifocal long-focus depth; and the deformable lens includes a plurality of types, including, but not limited to, a lens having movable lenses or groups of lenses internally and/or externally.

Further, in S3, the performing n times of the laser scans includes: performing beam shaping on the pulse laser in advance before the (n'+1)th to n"th laser scans.

Even further, S3 further includes controlling the diameter Dn'+1 of the modified point for the (n'+1)th to n"th laser scans to be in a range of 15 µm-100 µm.

Even further, in S3, in an emission path of the pulse laser of the (n'+1)th to n"th laser scan, the components including a control unit, a second laser, a second beam combining unit, a beam shaping unit, a second workpiece reflector, a second objective lens, and the crystal ingot are sequentially arranged; wherein, at least two second lasers are set in parallel, the second beam combining unit includes a second beam combining mirror disposed on an emission path of a pulse laser of one of the second lasers, and a second laser reflector disposed between an emission path of a pulse laser from the remaining second lasers and the second combining mirror, and the beam shaping unit is provided as an adaptive optical element, a diffractive optical element, or the like.

Even further, in S3, the process of beam shaping includes: shaping the incident beam of the pulse laser through the adaptive optical element, shaping the incident beam of the pulse laser through the diffractive optical element, or increasing beam quality factor of the incident beam of the pulse laser. The adaptive optical element includes a plurality of types, including, but not limited to, a spatial light modulator and a digital micromirror array, and the diffractive optical element includes a plurality of types, including, but not limited to, a beam shaper, a beamsplitter, a diffractive cone lens, a helical phase plate, a homogenizer, and a multifocal long-focus depth.

Specifically, a count of the laser scans is set to two, and the scanning paths for two laser scans are set as the line-by-line scanning paths. The scanning paths of the two laser scans may completely overlap in parallel, partially overlap in parallel, or intersect perpendicularly. The specific implementation of the generation method of the wafer is as follows.

During the first laser scan, the pulse laser needs to be focused on the predetermined peeling surface inside the crystal ingot, which is the specific depth within the crystal ingot where the wafer is to be generated. By driving the crystal ingot and the laser focal point to undergo lateral relative movement along the scanning path through a drive module, thereby forming the modified points that cover the entire wafer through the laser scan. The modified points formed by the first laser scan are independent of each other, i.e., there is no interaction between two adjacent modified points. As a result, the phenomenon of self-organized gradual deepening of the modified points to form a modified layer does not occur. Additionally, the modified points are uniformly located near the laser focal point. To achieve the above purpose, processing parameters of the pulse laser need to satisfy the following conditions: a point spacing P₁ between two adjacent modified points on a same scanning segment is not less than 0.7 times of a diameter D₁ of the modified point, i.e. P₁ ≥ 0.7D₁. It should be noted that this conclusion is derived from a profound understanding of the self-organization formation principle of the modified layer. Specifically, when P₁ < 0.7D₁, the next laser pulse is influenced by the modified point generated by the previous laser pulse, causing it to no longer propagate to the laser focal point. As a result, the location of the modified point gradually shifts upward until an overlapping rate between two adjacent modified points and the laser power density reach equilibrium. This process leads to the formation of a stable and thin modified layer at a specific depth.

On the predetermined rule for the first laser scan (i.e., n' = 1), the laser pulse repetition frequency of the laser is noted as F₁ and the laser scanning speed is noted as V₁, based on the relationship (P₁ = V₁/F₁), the laser pulse repetition frequency F₁ and the laser scanning speed V₁ may be dynamically adjusted based on the point spacing P₁. At the same time, the diameter of the modified point produced by the action of a single laser pulse is noted as D₁, then D₁ may be derived by measuring the diameter of the modified point through a microscope under the condition of setting P₁ to be much larger than D₁. D₁ is related to a laser pulse energy E₁ that forms the modified point. The larger E₁ is, the more D₁ increases within a certain range, but an extension length of the modified point in the longitudinal direction (i.e., the longitudinal thickness) also increases. The smaller E₁ is, the more D₁ decreases within a certain range. However, if E₁ is too small, it results in the laser pulse being unable to form a stable modified point. After selecting the appropriate E₁ and P₁, the laser scan is performed on the entire surface of the crystal ingot, and a line distance between two scanning segments spaced apart from each other on the scanning path is noted as L₁.

Preferably, to minimize material peeling loss, the focusing lens in the first laser scan requires aberration correction. This correction eliminates the spherical aberration caused by the refraction of the laser at the air-ingot interface, ensuring that the optical field inside the crystal ingot is as concentrated as possible in the propagation direction. Consequently, this reduces the longitudinal thickness of the modified points formed during the first laser scan.

Preferably, a laser wavelength λ₁ of the first laser scan is in a range of 780 nm-2500 nm, a laser pulse width Δt₁ is in a range of 10 fs-5 ns, and a laser pulse energy E₁ is greater than or equal to 1 µJ.

Preferably, during the first laser scan, the adjacent modified points may be placed as close as possible (i.e., minimizing P₁) under the condition that the depth of the modified points does not gradually increase to self-organize to form a modified layer. Alternatively, for the same processing trace, a relative movement count m₁ between the laser and the crystal ingot may be set to be greater than or equal to 1, such as processing the same processing trace line in a round-trip manner, the relative movement count m₁ being 2. Additionally, each laser pulse used to generate the modified point may be configured as a pulse string including a plurality of sub-pulses, and the time interval between adjacent sub-pulses does not exceed 100 ns, to achieve a processing effect that is as dense as possible.

Secondly, during a second laser scanning process, the pulse laser needs to be focused below the predetermined peeling surface inside the crystal ingot. The pulse laser may act on part or all regions of the modified points generated during the first laser scan with a larger spot size. The drive module is then used to drive lateral relative movement between the crystal ingot and the laser focal point along the scanning path. This process enables the laser scan to form a modified layer composed of the modified points covering the entire wafer, while creating cracks that propagate along a cleavage plane of the crystal ingot at the modified regions. During this process, when the laser spot overlaps with the modified points generated in the first laser scan, the modified points (which include amorphous carbon and silicon) generated in the first laser scan may strongly absorb the laser energy. This results in a high local internal pressure at the overlapping parts, causing cracks to initiate and propagate laterally along the cleavage plane of the crystal ingot. By performing the second laser scan across the entire surface of the crystal ingot, a crack layer covering the entire crystal ingot is formed, thereby creating the predetermined peeling surface. Therefore, the key to the second laser scan lies in the generation and propagation of the cracks, which primarily depends on the modified points produced during the first laser scan. In other words, the cracks mainly form in the overlapping region of the two laser scans. If the processing parameters of the second laser scan are applied independently, it may not be possible to create a well-formed modified layer or cracks. The approach avoids the issue of the modified points gradually shifting upward at the laser scanning end, which occurs during standalone processing aimed at crack generation.

On the predetermined rule for the second laser scan (n" = 2), the laser pulse repetition frequency of the laser is noted as F₂ and the laser scanning speed is noted as V₂, then the point spacing of adjacent modified points on the same scanning line in the second laser scan is represented by P₂ = V₂/F₂. Additionally, a spot diameter of the second laser scan at the depth of the modified points generated by the first laser scan is denoted as D₂. To form a good crack layer, P₂ and D₂ may satisfy a relationship of P₂ < D₂. Further, 0.2D₂ < P₂ < 0.6D₂.

Preferably, in order to make the laser have a larger spot area at the depth where a wafer thickness is generated after being focused by the focusing lens, the laser focal point of the second laser scan is shifted downward by a certain amount, i.e., an offset distance S₂ is set within a range of 5 µm-20 µm. To ensure that the second laser scan, when performed independently, does not form a well-defined modified layer or cracks after being focused by the focusing lens, it is necessary for a focused beam of the second laser scan to also have a larger spot area at the laser focal point.

Preferably, a laser wavelength λ₂ of the second laser scan is in a range of 780 nm-2500 nm, a laser pulse width Δt₂ is in a range of 10 ps-100 ns, and a laser pulse energy E₂ is greater than or equal to 5 µJ.

Further, for the same processing trace, a relative movement count m₂ between the laser and the crystal ingot is set to be greater than or equal to 1, such as processing the same processing trace line in a round-trip manner, the relative movement count m₂ being 2. Alternatively, each laser pulse used to generate the modified points is configured as the pulse string including the plurality of sub-pulses, and the time interval between adjacent sub-pulses does not exceed 100 ns, to achieve a processing effect that is as dense as possible.

Finally, during the peeling process, the upper and lower ends of the crystal ingot that has undergone two laser scans may be fixed to two rigid fixtures using an adhesive. Opposite external forces are then applied to the two fixtures, causing the wafer to separate along the peeling surface. The wafer and the remaining ingot are then removed from the fixtures, and the peeling surface is ground or thinned to perform the next cycle of the wafer generation process with the remaining ingot.

In summary, the beneficial effects of the present disclosure include solving the phenomenon of climbing up of the modified points existing in the existing laser back-and-forth scanning technique and the problems of the harsh process conditions existing in the pulse laser articulated scanning of the short pulse width and long pulse width, which not only eliminates the wafer edge burrs, but also further reduces the material loss of the modified layer. It has the advantages of simple process conditions, good morphology of the modified layer, and low difficulty of peeling of wafers, and is suitable for large-scale industrial applications.

### DESCRIPTION OF FIGURES

FIG. 1 is a schematic diagram illustrating a main view structure of a crystal ingot during a laser scan according to the prior art of the present disclosure;
FIG. 2 is a schematic diagram illustrating a connection relationship between a first laser, a first beam combining and expanding unit, an aberration correction unit, a first workpiece reflector, a first objective lens, and a crystal ingot according to Example 2 of the present disclosure;
FIG. 3 is a schematic diagram illustrating a connection relationship between a second laser, a second beam combining unit, a beam shaping unit, a second workpiece reflector, a second objective lens, and a crystal ingot according to Example 2 of the present disclosure;
FIG. 4 is a schematic diagram illustrating a main view structure of a crystal ingot during a first laser scan according to Example 3 of the present disclosure;
FIG. 5 is a schematic diagram illustrating a top-view structure of a crystal ingot during a first laser scan according to Example 3 of the present disclosure;
FIG. 6 is a schematic diagram illustrating a locally enlarged structure of a crystal ingot during a first laser scan according to Example 3 of the present disclosure;
FIG. 7 is a schematic diagram illustrating a main view structure of a crystal ingot during a second laser scan according to Example 3 of the present disclosure;
FIG. 8 is a schematic diagram illustrating a top-view structure of a crystal ingot during a second laser scan according to Example 3 of the present disclosure;
FIG. 9 is a schematic diagram illustrating a locally enlarged structure of a crystal ingot during a second laser scan according to Example 3 of the present disclosure;
FIG. 10 is a characterization diagram illustrating a side view of a wafer made in Example 3 of the present disclosure;
FIG. 11 is a schematic diagram illustrating a top-view structure of a crystal ingot during a second laser scan according to Example 4 of the present disclosure; and
FIG. 12 is a schematic diagram illustrating a locally enlarged structure of a crystal ingot during a second laser scan according to Example 4 of the present disclosure;

### Reference numerals:

1, wafer; 2, crystal ingot; 3, predetermined peeling surface; 4, modified point; 5, crack; 61, a first laser; 62, first beam combining and expanding unit; 621, first beam combining mirror; 622, first laser reflector; 623, beam expanding mirror; 63, aberration correction unit; 64, first workpiece reflector; 65, first objective lens; 71, second laser; 72, second beam combining unit; 721, second beam combining mirror; 722, second laser reflector; 73, beam shaping unit; 74, second workpiece reflector; 75, second objective lens.

### MODE OF CARRYING OUT THE INVENTION

In order to make the technical means, creative features, objectives and functions of the present invention clearer and easier to understand, the following will further elaborate on the present invention in conjunction with the accompanying drawings and specific embodiments.

### Example 1

The present disclosure discloses a generation method of a semiconductor wafer, including:
S1, setting a count of laser scans to n times, wherein n is an integer greater than or equal to 2, setting a scanning path for each laser scan and a point spacing between two adjacent modified points on the scanning path;
S2, determining, based on a predetermined rule for the each laser scan, a laser scanning speed and a laser pulse repetition frequency required to achieve the point spacing and determining a corresponding diameter of a modified point, and determining laser pulse energy required to achieve the diameter of the modified point and an offset distance of a laser focal point relative to a predetermined peeling surface;
S3, performing n times of the laser scans on the predetermined peeling surface inside a crystal ingot on which a pulse laser focuses or below the predetermined peeling surface to form a modified point on the predetermined peeling surface and forming an overlapping region between the modified points formed by at least two laser scans to form a crack extending transversely along the predetermined peeling surface in the overlapping region; and
S4, peeling the crystal ingot along the predetermined peeling surface to obtain a wafer and a remaining ingot.

### Example 2

The present disclosure discloses a generation method of a semiconductor wafer, which differs from Example 1 in that n is 2, in S3, the aberration correction is performed on the pulse laser in advance before the first laser scan, and the beam shaping is performed on the pulse laser in advance before the second laser scan.

Referring to FIG. 2, firstly, in an emission path of the pulse laser of the first laser scan, the components including a first laser 61, a first beam combining and expanding unit 62, an aberration correction unit 63, a first workpiece reflector 64, a first objective lens 65, and the crystal ingot 2 are sequentially arranged; wherein, two first lasers 61 are set in parallel, the first beam combining and expanding unit 62 includes a first combining mirror 621 disposed on an emission path of a pulse laser of one of the first lasers 61, a first laser reflector 622 disposed between an emission path of a pulse laser of the remaining first lasers 61 and the first beam combining mirror 621, and a beam expanding mirror 623 disposed on an emission path of a pulse laser of the first combining mirror 621, the aberration correction unit 63 includes an adaptive optical element, a diffractive optical element, a deformable lens, a spatial light modulator (SLM), or the like.

Specifically, the process of the aberration correction includes: performing wavefront shaping on an incident beam of the pulse laser by the adaptive optical element, compensating for aberration of the focusing lens of the pulse laser at a particular depth by the diffractive optical element, or adjusting the deformable lens to preset the aberration and compensate for aberration of the focusing lens of the pulse laser at a particular depth. The adaptive optical element includes a plurality of types, including, but not limited to, a spatial light modulator and a digital micromirror array, the diffractive optical element includes a plurality of types, including, but not limited to, a beam shaper, a beamsplitter, a diffraction cone lens, a helical phase plate, a homogenizer, and a multifocal long-focus depth; and the deformable lens includes a plurality of types, including, but not limited to, a lens having movable lenses or groups of lenses internally and/or externally.

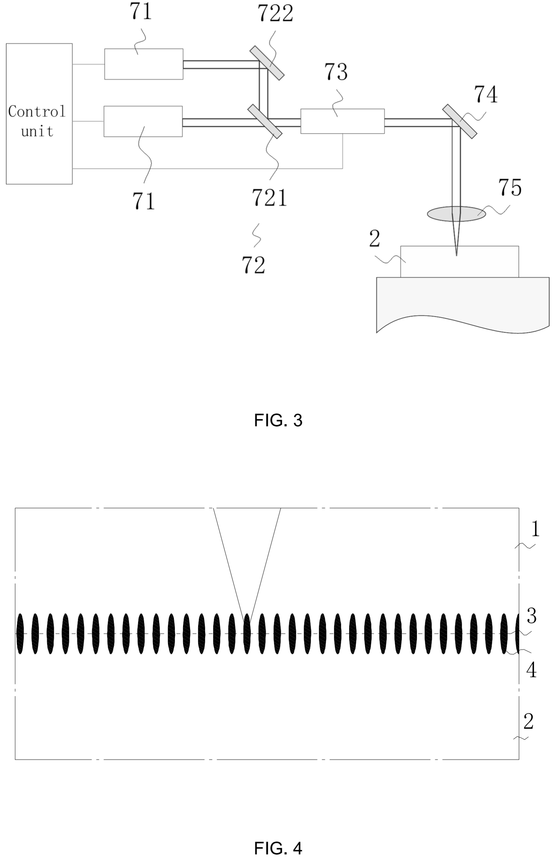

Referring to FIG. 3, secondly, in an emission path of the pulse laser of the second laser scan, the components including a control unit, a second laser 71, a second beam combining unit 72, a beam shaping unit 73, a second workpiece reflector 74, a second objective lens 75, and the crystal ingot 2 are sequentially arranged; wherein, two second lasers 71 are set in parallel, the second beam combining unit 72 includes a second beam combining mirror 721 disposed on an emission path of a pulse laser of one of the second lasers 71, and a second laser reflector 722 disposed between an emission path of a pulse laser from the remaining second lasers 71 and the second combining mirror 721, and the beam shaping unit 73 is provided as an adaptive optical element, a diffractive optical element, an SLM beam shaper, or the like.

Specifically, the process of beam shaping includes: shaping the incident beam of the pulse laser through the adaptive optical element, shaping the incident beam of the pulse laser through the diffractive optical element, or increasing beam quality factor of the incident beam of the pulse laser. The adaptive optical element includes a plurality of types, including, but not limited to, a spatial light modulator and a digital micromirror array, and the diffractive optical element includes a plurality of types, including, but not limited to, a beam shaper, a beamsplitter, a diffractive cone lens, a helical phase plate, a homogenizer, and a multifocal long-focus depth.

### Example 3

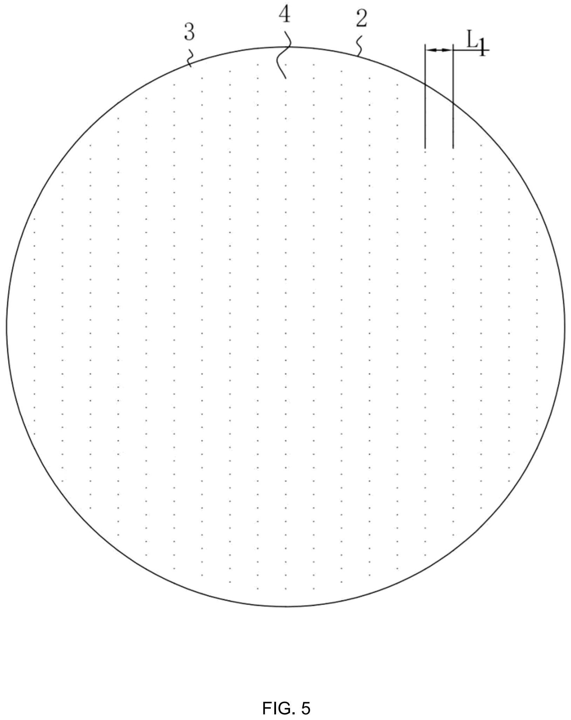

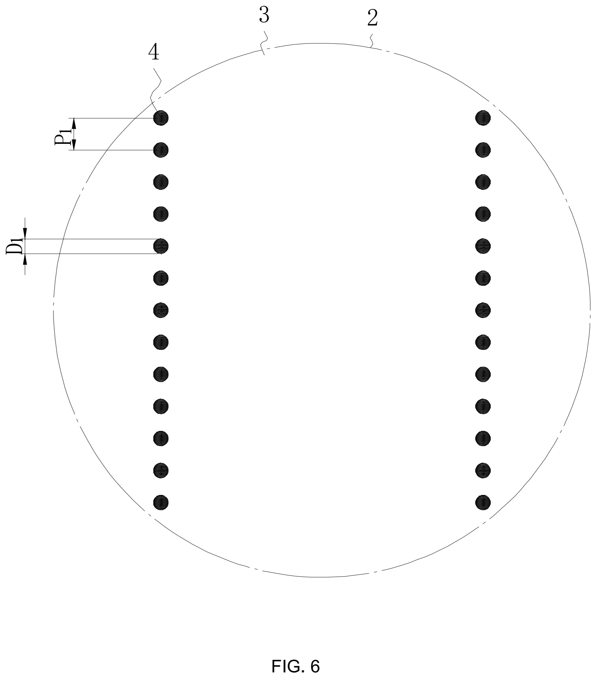

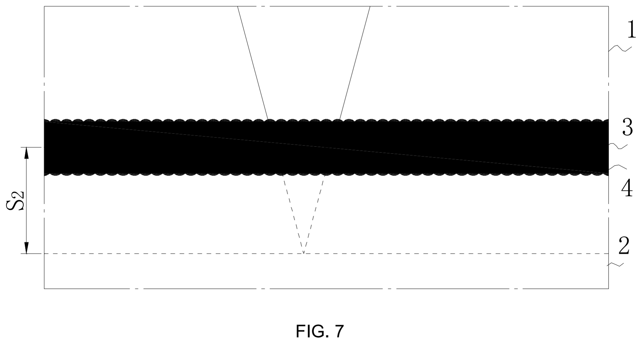

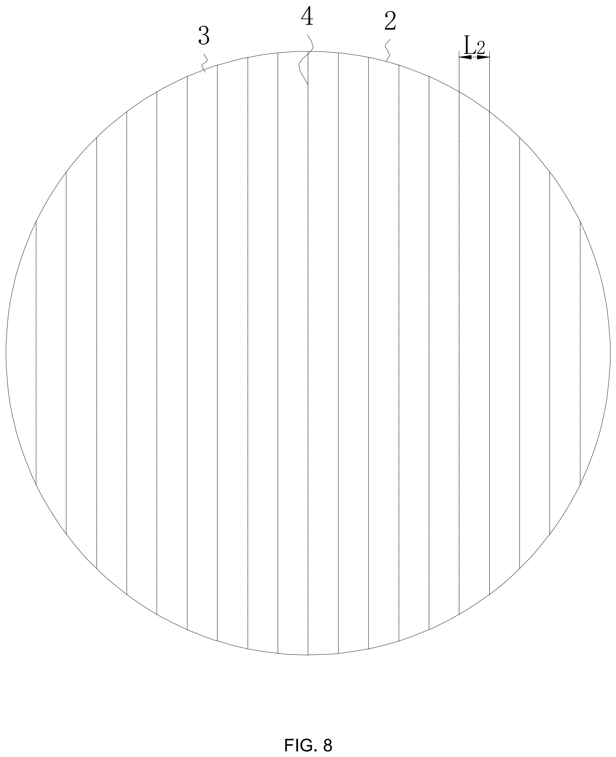

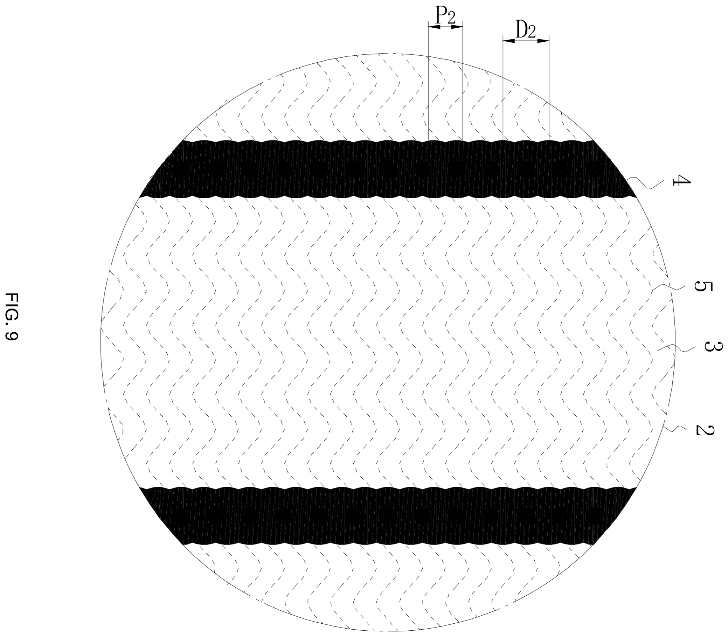

Referring to FIGs. 4-9, the present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ being equal to 6 µm between two adjacent modified points 4 on a first scanning path, the line distance L₁ between two scanning segments spaced apart from each other being equal to 0.15 mm, the point spacing P₂ between two adjacent modified points 4 on a second scanning path being equal to 6 µm, and the line distance L₂ between two scanning segments spaced apart from each other being equal to L₁.

S2, based on a predetermined rule for the first laser scan: P₁ = V₁/F₁, P₁ ≥ 0.7D₁, and E₁ ≥ 1µJ, selecting a pulse laser with a laser wavelength λ₁ of 1030 nm, and a laser pulse width Δt₁ of 300 fs, determining the laser scanning speed V₁ as 300 mm/s and the laser pulse repetition frequency F₁ as 50 kHz required to achieve the point spacing P₁, determining the corresponding diameter D₁ of the modified point 4 as 7 µm, and then determining the laser pulse energy E₁ as 8 µJ required to achieve the diameter D₁ of the modified point 4 and the offset distance S₁ of the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within a range of 25 µm-30 µm.

S4, based on the predetermined rule for the second laser scan: P₂ = V₂/F₂, P₂ < D₂, and E₂ ≥ 5 µJ, selecting a pulse laser with a laser wavelength λ₂ of 1030 nm and a laser pulse width Δt₂ of 50 ps; determining the laser scanning speed V₂ as 300 mm/s and the laser pulse repetition frequency F₂ as 50 kHz required to achieve the point spacing P₂, determining the corresponding diameter D₂ of the modified point 4 as 25 µm, and subsequently, determining the laser pulse energy E₂ as 20 µJ required to achieve the diameter D₂ of the modified point 4 and the offset distance S₂ of the laser focal point relative to the predetermined peeling surface 3 as 10 µm.

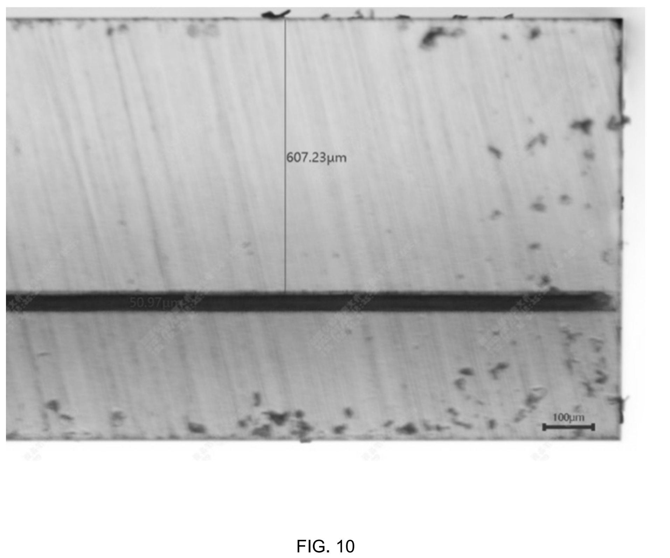

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region; referring to FIG. 10, by characterizing the wafer 1 processed according to the above parameters, a total thickness of the laser action region of the wafer 1 is approximately 50 µm, with no issue of the modified points 4 gradually rising at the laser scanning end, thereby effectively reducing material loss during laser slicing.

### Example 4

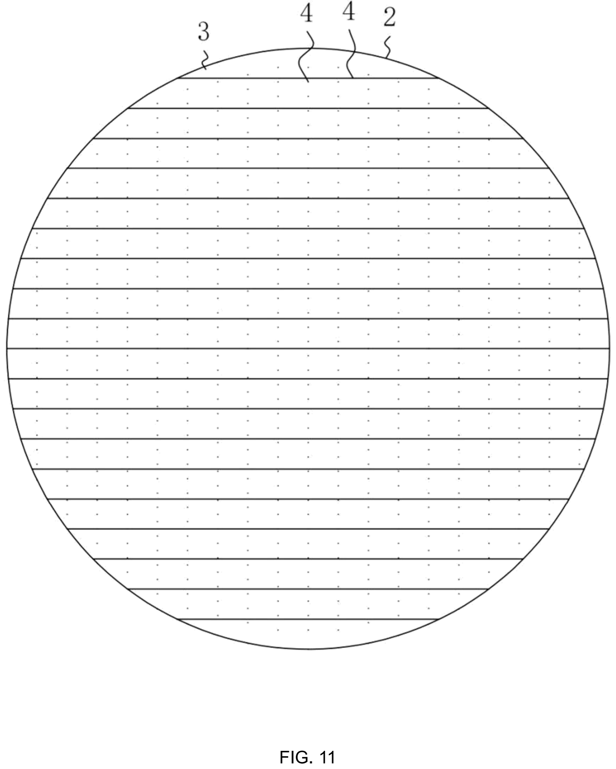

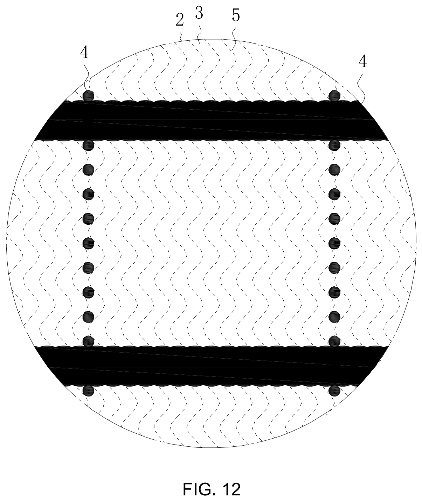

Referring to FIGs. 11-12, the present disclosure discloses a generation method of a semiconductor wafer, which differs from Example 3 in that, in S1, the scanning paths of the two laser scans are crossed and vertically overlapped with each other. The line distance L₁ and the line distance L₂ have no proportional relationship and are each independently selected from 0.10 mm to 1.00 mm. For example, the line distance L₁ between two scanning segments spaced apart from each other on the first scanning path is equal to 0.10 mm, and the line distance L₂ between two scanning segments spaced apart from each other on the second scanning path is equal to 0.10 mm.

### Example 5

The present disclosure discloses a generation method of a semiconductor wafer, which differs from Example 3 in that in S3, the pulse laser is a pulse string including three sub-pulses; and a time interval between two adjacent sub-pulses is 50 ns.

### Example 6

The present disclosure discloses a generation method of a semiconductor wafer, which differs from Example 3 in that, in S5, the pulse laser is a pulse string including three sub-pulses; and a time interval between two adjacent sub-pulses is 50 ns.

### Example 7

The present disclosure discloses a generation method of a semiconductor wafer, which differs from Example 3 in that, in S3, for the same processing trace, a relative movement count m₁ between the laser and the crystal ingot is set to be two, i.e., the same processing trace line is processed in a round-trip manner by following the scanning path of the first laser scan.

### Example 8

The present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ between two adjacent modified points 4 on a first scanning path being equal to 5 µm, the line distance L₁ between two scanning segments spaced apart from each other being equal to 0.10 mm, the point spacing P₂ between two adjacent modified points 4 on a second scanning path being equal to 15 µm, and the line distance L₂ between two scanning segments spaced apart from each other being equal to 2 times of L₁.

S2, based on a predetermined rule for a first laser scan: P₁ = V₁/F₁, P₁ ≥ 0.7D₁, and E₁ ≥ 1 µJ, selecting a pulse laser with a laser wavelength λ₁ of 800 nm and a laser pulse width Δt₁ of 10 fs, determining the laser scanning speed V₁ as 250 mm/s and the laser pulse repetition frequency F₁ as 50 kHz required to achieve the point spacing P₁, determining the corresponding diameter D₁ of the modified point 4 as 7 µm, and then determining the laser pulse energy E₁ as 8 µJ required to achieve the diameter D₁ of the modified point 4 and the offset distance S₁ of the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within 25 µm-30 µm.

S4, based on a predetermined rule for a second laser scan: P₂ = V₂/F₂, P₂ < D₂, and E₂ ≥ 5 µJ, selecting a pulse laser with a laser wavelength λ₂ of 800 nm and a laser pulse width Δt₂ of 100 ps; determining the laser scanning speed V₂ as 750 mm/s and the laser pulse repetition frequency F₂ as 50 kHz required to achieve the point spacing P₂, determining the corresponding diameter D₂ of the modified point 4 as 50 µm, and subsequently, determining the laser pulse energy E₂ as 40 µJ required to achieve the diameter D₂ of the modified point 4 and the offset distance S₂ of the laser focal point relative to the predetermined peeling surface 3 as 20 µm.

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region.

### Example 9

The present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ between two adjacent modified points 4 on a first scanning path being equal to 8 µm, the line distance L₁ between two scanning segments spaced apart from each other being equal to 0.80 mm, the point spacing P₂ between two adjacent modified points 4 on a second scanning path being equal to 30 µm, and the line distance L₂ between two scanning segments spaced apart from each other being equal to L₁.

S2, based on a predetermined rule for a first laser scan: P₁ = V₁/F₁, P₁ ≥ 0.7D₁, and E₁ ≥ 1 µJ, selecting a pulse laser with a laser wavelength λ₁ of 1030 nm and a laser pulse width Δt₁ of 200 ps, determining the laser scanning speed V₁ as 400 mm/s and the laser pulse repetition frequency F₁ as equal to 50 kHz required to achieve the point spacing P₁, determining the corresponding diameter D₁ of the modified point 4 as 10 µm, and then determining the laser pulse energy E₁ as 12 µJ required to achieve the diameter D₁ of the modified point 4 and the offset distance S₁ of the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within 30 µm-35 µm.

S4, based on a predetermined rule for a second laser scan: P₂ = V₂/F₂, P₂ < D₂, and E₂ ≥ 5 µJ, selecting a pulse laser with a laser wavelength λ₂ of 1064 nm and a laser pulse width Δt₂ of 20 ns; determining the laser scanning speed V₂ as 1500 mm/s and the laser pulse repetition frequency F₂ as 50 kHz required to achieve the point spacing P₂, determining the corresponding diameter D₂ of the modified point 4 as 100 µm, and subsequently, determining the laser pulse energy E₂ as 80 µJ required to achieve the diameter D₂ of the modified point 4 and the offset distance S₂ of the laser focal point relative to the predetermined peeling surface 3 as 20 µm.

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region.

### Example 10

The present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ between two adjacent modified points 4 on a first scanning path being equal to 10 µm, the line distance L₁ between two scanning segments spaced apart from each other being equal to 0.40 mm, the point spacing P₂ between two adjacent modified points 4 on a second scanning path being equal to 8 µm, and the line distance L₂ between two scanning segments spaced apart from each other being equal to 2 times of L₁.

S2, based on a predetermined rule for a first laser scan: P₁ = V₁/F₁, P₁ ≥ 0.7D₁, and E₁ ≥ 1µJ, selecting a pulse laser with a laser wavelength λ₁ of 1064 nm, and a laser pulse width Δt₁ of 100 ps, determining the laser scanning speed V₁ as 500 mm/s and the laser pulse repetition frequency F₁ as 50 kHz required to achieve the point spacing P₁, determining the corresponding diameter D₁ of the modified point 4 as 5 µm, and then determining the laser pulse energy E₁ as 6 µJ required to achieve the diameter D₁ of the modified point 4 and the offset distance S₁ the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within a range of 15 µm-20 µm.

S4, based on a predetermined rule for a second laser scan: P₂ = V₂/F₂, P₂ < D₂, and E₂ ≥ 5 µJ, selecting a pulse laser with a laser wavelength λ₂ of 1340 nm and a laser pulse width Δt₂ of 5 ns; determining the laser scanning speed V₂ as 400 mm/s and the laser pulse repetition frequency F₂ as 50 kHz required to achieve the point spacing P₂, determining the corresponding diameter D₂ of the modified point 4 as 15 µm, and subsequently, determining the laser pulse energy E₂ as 12 µJ required to achieve the diameter D₂ of the modified point 4 and the offset distance S₂ of the laser focal point relative to the predetermined peeling surface 3 as 10 µm.

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region.

### Example 11

The present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ between two adjacent modified points 4 on a first scanning path being equal to 13 µm, the line distance L₁ between two scanning segments spaced apart from each other being equal to 1.00 mm, the point spacing P₂ between two adjacent modified points 4 on a second scanning path being equal to 40 µm, and the line distance L₂ between two scanning segments spaced apart from each other being equal to L₁.

S2, based on a predetermined rule for a first laser scan: P₁ = V₁/F₁, P₁ ≥ 0.7D₁, and E₁ ≥ 1µJ, selecting a pulse laser with a laser wavelength λ₁ of 2100 nm, and a laser pulse width Δt₁ of 5 ns, determining the laser scanning speed V₁ as 650 mm/s and the laser pulse repetition frequency F₁ as 50 kHz required to achieve the point spacing P₁, determining the corresponding diameter D₁ of the modified point 4 as 15 µm, and then determining the laser pulse energy E₁ as 18 µJ required to achieve the diameter D₁ of the modified point 4 and the offset distance S₁ of the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within a range of 35 µm-40 µm.

S4, based on a predetermined rule for a second laser scan: P₂ = V₂/F₂, P₂ < D₂, and E₂ ≥ 5 µJ, selecting a pulse laser with a laser wavelength λ₂ of 1550 nm and a laser pulse width Δt₂ of 100 ns; determining the laser scanning speed V₂ as 2000 mm/s and the laser pulse repetition frequency F₂ as 50 kHz required to achieve the point spacing P₂, determining the corresponding diameter D₂ of the modified point 4 as 80 µm, and subsequently, determining the laser pulse energy E₂ as 60 µJ required to achieve the diameter D₂ of the modified point 4 and the offset distance S₂ of the laser focal point relative to the predetermined peeling surface 3 as 15 µm.

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region.

### Example 12

The present disclosure discloses a generation method of a semiconductor wafer, which differs from Example 2 in that it includes the following operations.

S1, setting a count of laser scans to be two, setting a scanning path of each laser scan to be a line-by-line scanning path, and setting the scanning paths of the two laser scans to be completely parallel and overlapping, with the point spacing P₁ between two adjacent modified points 4 on a first scanning path being equal to 6 µm, the line distance L₁ between two scanning segments spaced apart from each other being equal to 0.30 mm, the point spacing P₂ between two adjacent modified points 4 on a second scanning path being equal to 7 µm, and the line distance L₂ between two scanning segments spaced apart from each other being equal to 2 times of L₁.

S2, based on a predetermined rule for a first laser scan: P₁ = V₁/F₁, P₁ ≥ 0.7D₁, and E₁ ≥ 1µJ, selecting a pulse laser with a laser wavelength λ₁ of 1340 nm, and a laser pulse width Δt₁ of 50 ps, determining the laser scanning speed V₁ as 600 mm/s and the laser pulse repetition frequency F₁ as 100 kHz required to achieve the point spacing P₁, determining the corresponding diameter D₁ of the modified point 4 as 7 µm, and then determining the laser pulse energy E₁ as 5 µJ required to achieve the diameter D₁ of the modified point 4 and the offset distance S₁ of the laser focal point relative to the predetermined peeling surface 3 as 0 µm.

S3, focusing the pulse laser on the predetermined peeling surface 3 inside the crystal ingot 2, performing the first laser scan to form the modified points 4 on the predetermined peeling surface 3, with the modified points 4 not occurring the phenomenon of self-organizing into a modified layer with gradually increasing depth, the modified points 4 uniformly being located near a laser focal point of a focusing lens, and a longitudinal thickness of the modified points 4 being within a range of 5 µm-10 µm.

S4, based on a predetermined rule for a second laser scan: P₂ = V₂/F₂, P₂ < D₂, and E₂ ≥ 5 µJ, selecting a pulse laser with a laser wavelength λ₂ of 2100 nm and a laser pulse width Δt₂ of 10 ns; determining the laser scanning speed V₂ as 700 mm/s and the laser pulse repetition frequency F₂ as 100 kHz required to achieve the point spacing P₂, determining the corresponding diameter D₂ of the modified point 4 as 25 µm, and subsequently, determining the laser pulse energy E₂ as 20 µJ required to achieve the diameter D₂ of the modified point 4 and the offset distance S₂ of the laser focal point relative to the predetermined peeling surface 3 as 10 µm.

S5, focusing the pulse laser below the predetermined peeling surface 3 inside the crystal ingot 2, performing the second laser scan to form the modified points 4 on the predetermined peeling surface 3, with the modified points 4 formed by the two laser scans creating an overlapping region, thereby forming the cracks 5 extending laterally along the predetermined peeling surface 3 in the overlapping region.

Finally, it should be noted that the above embodiments are only used to illustrate the technical solution of the present invention and not to limit it. Although the present invention has been described in detail with reference to the preferred embodiments, those of ordinary skill in the art should understand that the technical solution of the present invention can be modified or equivalently replaced without departing from the purpose and scope of the technical solution of the present invention, which should be included in the scope of the claims of the present invention.

## Claims

1. A generation method of a semiconductor wafer, comprising:
S1, setting a count of laser scans to n times, wherein n is an integer greater than or equal to 2, setting a scanning path for each laser scan and a point spacing between two adjacent modified points on the scanning path;
S2, determining, based on a predetermined rule for the each laser scan, a laser scanning speed and a laser pulse repetition frequency required to achieve the point spacing and determining a corresponding diameter of a modified point, and determining laser pulse energy required to achieve the diameter of the modified point and an offset distance of a laser focal point relative to a predetermined peeling surface;
S3, performing n times of the laser scans on the predetermined peeling surface inside a crystal ingot on which a pulse laser focuses or below the predetermined peeling surface to form a modified point on the predetermined peeling surface and forming an overlapping region between the modified points formed by at least two laser scans to form a crack extending transversely along the predetermined peeling surface in the overlapping region; and
S4, peeling the crystal ingot along the predetermined peeling surface to obtain a wafer and a remaining ingot.

2. The method of claim 1, in S1, the setting a scanning path for each laser scan includes: setting the scanning path for the each laser scan to be a combination path of at least one of a line-by-line scanning path, a grid-interleaved scanning path, a concentric circle scanning path, and a vortex line scanning path.

3. The method of claim 2, in S1, the setting a scanning path for each laser scan further includes: controlling a range of a line distance between two scanning segments spaced apart from each other on the scanning path to be 0.05 mm to 1.00 mm.

4. The method of claim 1, in S2, the predetermined rule includes predetermined rules for 1st to n'th laser scans, wherein the predetermined rules for the 1st to n'th laser scans include: a point spacing between two adjacent modified points on 1st to n'th scanning paths being positively correlated with 1st to n'th laser scanning speed and negatively correlated with 1st to n'th laser pulse repetition frequency, wherein the point spacing between the two adjacent modified points on the 1st to n'th scanning paths is greater than or equal to 0.7 times of a diameter of a modified point on n'th laser scan, wherein 1st to n'th laser pulse energy is greater than or equal to 1 µJ, an offset distance of 1st to n'th laser focal point relative to the predetermined peeling surface is within a range of 0 µm-5 µm, and n' is an integer greater than or equal to 1.

5. The method of claim 1, in S2, the predetermined rule includes predetermined rules for (n'+1)th to n"th laser scans, wherein the predetermined rules for the (n'+1)th to n"th laser scans include: a point spacing between two adjacent modified points on (n'+1)th to n"th scanning paths being positively correlated with (n'+1)th to n"th laser scanning speed and negatively correlated with (n'+1)th to n"th laser pulse repetition frequency, wherein the point spacing between the two adjacent modified points on the (n'+1)th to n"th scanning paths is less than to a diameter of a modified point on (n'+1)th laser scan, wherein (n'+1)th to n"th laser pulse energy is greater than or equal to 5 µJ, an offset distance of (n'+1)th to n"th laser focal points relative to the predetermined peeling surface is within a range of 0 µm-20 µm, and n" is an integer greater than or equal to 2.

6. The method of claim 5, in S2, the predetermined rules for the (n'+1)th to n"th laser scans further include: controlling the point spacing between the two adjacent modified points on the (n'+1)th to n"th scanning paths to be within a predetermined multiplier range of 0.2-0.6 times of the diameter of the modified point of the (n'+1)th laser scan.

7. The method of claim 1, in S3, the performing n times of the laser scans includes: controlling a laser wavelength range of the each laser scan to be 780 nm-2500 nm, and a laser pulse width range of the each laser scan to be 10 fs-1 OOns.

8. The method of claim 1, in S3, the pulse laser is a pulse string including a plurality of sub-pulses; wherein a time interval between two adjacent sub-pulses is not more than 100 ns.

9. The method of claim 1, in S3, the performing n times of the laser scans includes: performing an aberration correction on the pulse laser in advance before the 1st to n'th laser scans.

10. The method of claim 1, in S3, the performing n times of the laser scans includes: performing beam shaping on the pulse laser in advance before the (n'+1)th to n"th laser scans.
